# EUROPEAN PATENT APPLICATION

(11) **EP 3 666 983 A1**
(43) Date of publication of application: **17.06.2020**
(21) Application number: 18382913.4
(22) Date of filing: 12.12.2018
(51) Int. Cl.: E02F 9/28, E02F 9/26, E02F 9/24

(54) **FORCE MEASURING SYSTEM FOR EARTH MOVING MACHINERY**

(71) Applicant: Metalogenia Research & Technologies S.L., 08005 Barcelona (ES)
(72) Inventor: VALLVÉ BERTRAN, Nil, 08349 CABRERA DE MAR (Barcelona) (ES); TRIGINER CASTAÑÉ, Javier, 08034 BARCELONA (ES); MARQUEZ LLINAS, Jordi, 08223 TERRASSA (Barcelona) (ES); GIMENO TORDERA, Albert, 08027 BARCELONA (ES); ALONSO FRIGOLA, Ester, 17460 CELRA (Girona) (ES); TRIGINER BOIXEDA, Jorge, 08017 BARCELONA (ES)
(74) Representative: Herrero & Asociados, S.L.

(57) **Abstract**

Force measuring system for earth moving machinery, the earth moving machinery comprising a plurality of wear elements (1, 8, 9) and one or more sensors (2) for measuring forces, wherein said one or more sensors (2) are placed in at least one of the wear elements (1, 8, 9) themselves.

The measuring method comprises the steps of measuring forces withstood by the wear elements; sending the values of the measured forces to control electronics (5) and/or to central control means (6); and determining an action to be performed depending on the received readings.

The present invention allows providing a force measuring system focusing on the field acquisition of real data about the forces to which the wear elements are subjected, providing reliable and useful information in real time.

## Description

The present invention relates to a force measuring system for earth moving machinery, for example, for excavators or loaders for public works jobs and mining, or the like.

### Background of the invention

The use of earth moving machines such as excavators or loaders, for example, for working in construction sites, mining, dredging, etc., is common. These machines generally comprise a shovel or bucket in which the material is collected. This shovel is subjected to high stresses and significant wear, mainly in the area referred to as blade. For this reason, generally the blades usually have a plurality of installed elements serving to protect the blade and the bucket against wear and to increase the penetration of the bucket into the terrain.

These protective elements include:
- teeth: which have the function of penetrating the terrain and protecting the blade of the shovel;
- tooth bar: which has the function of protecting the blade and supporting the teeth;
- front guards: which have the function of protecting the lip in the areas comprised between the teeth and also perform the function of penetration, but to a lesser extent than the teeth;
- side guards: which protect the sides of the bucket;
- elements for fixing the teeth to the tooth bar.

All these elements are subjected to intense mechanical requirements, straining and to heavy wear. For this reason, they usually have to be replaced with a certain frequency, when the wear experienced requires it. They are therefore usually referred to as a whole as wear elements.

In these earth moving machines, the most important parameters are their reliability, productivity and efficiency, i.e., the cost per amount of excavated and loaded material and the incident-free machine operation time.

It is important to measure and calculate said mechanical requirements or forces to which the wear elements are subjected, to enable assuring machine productivity and efficiency. Today, to know the forces, pressures and loads to which the teeth and other wear elements are subjected in the most precise manner possible, theoretical studies are performed, offering complex and sophisticated mathematical solutions; they are an approximation of the real terrain data.

These current solutions include mechanical simulations mechanical which are complex and theoretical, being an approximation of the complete behavior of the machine and of the operation thereof, to offer the best design criterion of the machine. The information provided by these current solutions is theoretical and difficult to correlate with the reality of the excavation operation.

Therefore, an objective of the present invention is to provide a force, pressure and/or load measuring system for earth moving machinery focusing on the field acquisition of real data of the forces, pressures and/or loads to which the wear elements are subjected, providing reliable and useful information in real time, reducing the hypothetical variables due to the lack of a metric.

With this real time real data acquired in the terrain and together with the data supplied by the machine itself, such as the power it supplies, the breakout force, energy consumption, performance of the hydraulic system, etc.

Central control means will interpret said data so that said central control means provide as outputs instructions for efficiently managing the performance and the force of the machine.

A first objective of these central control means is to act for information purposes by notifying the operator of the machine if the recorded force is exceeding a predetermined threshold, with the subsequent risk of a wear element breaking. Or if the recorded force is lower than an optimal operating level, the system will inform the operator of the possibility of being able to excavate supplying more force, optimizing the excavation and loading cycle without the risk of experiencing the breaking of the wear elements.

A second objective of said central control means is to assist the operator of the machine by automatically adjusting, regulating and correcting the force to be supplied depending on the recorded field readings and the inputs of the machine itself. In this variant, the system will assist the operator so that the excavation and loading operation is always performed in the most optimal and productive manner, preventing unscheduled stoppages to thus improve the cost per ton moved.

A third objective is for this system to act within an autonomous machine environment, without an operator in the machine, which allows performing the excavation process with greater precision and efficiency, preventing the breaking of the wear elements, through the integration of the data measured by the sensors in the wear elements and the data provided by the machine itself.

### Description of the invention

The mentioned drawbacks are resolved with the force measuring system for earth moving machinery of the invention, while presenting other advantages which will be described below.

The force measuring system for earth moving machinery according to the present invention, where the earth moving machine comprises a plurality of wear elements and one or more sensors arranged in the wear elements themselves.

Said sensors measure the change in state in the wear element due to the mechanical requirements or force while the machine is working. This change in state, can be deformation, pressure, load, torque, position, etc.; and is processed to enable determining the real mechanical requirement or force to which the wear element is subjected.

It should be indicated that the teeth, tooth bar, guards and fixing elements of the earth moving machinery which have previously been described are understood as wear elements.

According to a preferred embodiment, said sensors are internally housed in a cavity formed in at least one of the wear elements. In a second embodiment, said sensors could be housed between the wear elements themselves.

Advantageously, said sensors are placed in the side walls and/or in the front wall of said cavity.

According to a preferred embodiment, said sensors are strain gauges, or pressure gauges and/or relative displacement gauges.

Preferably, said cavity has a tapered shape, being narrower in the front part than in the rear part, and the thickness defined between the outer part of the tooth and the cavity is greater in the front part of the cavity than in the rear part of the cavity.

For protecting the sensors, said cavity is coated with a protective substance, for example, silicone or resin.

Furthermore, if desired, said cavity can comprise a protective plate, for example, made of steel.

The force measuring system for earth moving machinery according to the present invention also preferably comprises control electronics housed inside said cavity, said control electronics being connected with the sensors.

Furthermore, said control electronics is connected to central control means, which calculate the force that the wear elements withstand depending on the values received from the sensors. Together with the data of the machine itself, these central control means manage the optimal operation of the machine, regulating the force applied during operation depending on the received readings, maximizing the efficiency of the machine and the productivity of the operation itself.

Alternatively, said central control means can be connected with a control center characteristic of the machine, the control means being what provide the information from the sensors to the control center of the machine, which will manage the information from the machine with the real data of the wear elements.

Preferably, each cavity comprises one or more sensors. In the described embodiments, the number of sensors is between 3 and 5.

By placing the sensors in the wear elements, these sensors provide more sensitive and precise data of each position individually than any sensor placed in other structural elements which do not have direct contact with the terrain, and without needing to use theoretical mathematical approximations.

Furthermore, as there is real time communication with the machine, the machine can interpret the data and make decisions based on the received pressure, force or load readings.

Depending on the received readings of the wear elements, the central control means decide whether or not to excavate with more force. If the force or pressure recorded in the wear elements is very high, exceeding a predetermined threshold and set by the actual resistance of the wear elements, the system informs the operator of the imminent breaking of said wear elements if the applied force is not reduced. Or directly and automatically, the central control means provides the instruction to the machine to reduce the applied breakout force and thus prevent the breaking of the elements.

If the force or pressure recorded in the wear elements is less than the established optimal level of said wear elements, the system informs the operator of the possibility of applying more force to the operation, considering the limits of other components of the machine, such as motors, hydraulic systems, transmission cables, etc., and the actual structural resistance of the machine. Another alternative is for the central control means to provide instructions to the machine directly and automatically to increase the applied breakout force and thus optimize the excavation and loading operation, reducing the loading cycle and thus improving the efficiency of the operation itself.

On one hand, this allows preventing breaking in the wear elements. It prevents unscheduled stoppages of the machines, which are very costly as they affect the productivity of the mine, quarry or construction site; and on the other hand, it allows optimizing the size of the wear elements, seeking the optimal balance between more penetration without the risk of breaking, smaller, more penetrating teeth with assurances that they will not break, because in the event of approaching ultimate stress, the machine receives the information and reduces the force, providing more excavation efficiency, more productivity, with lower energy consumption.

This capability of providing data to the machines about the wear elements in real time allows for a dual communication system, i.e., combining data about the machine itself (power, hydraulic system...) with data measured in the terrain through the sensors. This feedback allows the operator of the machine to have real data which allows making better decisions during the excavation and loading process. Furthermore, the system can assist the operator by automatically regulating, correcting and adjusting the applied force, making the operator's job easier and more precise. The same system can act within an autonomous machine environment, without an operator in the machine itself. Whether it is a remotely controlled machine without an operator in the cab or an autonomous machine, this system allows performing the excavation process with more precision and efficiency and preventing breaking of the wear elements.

### Brief description of the drawings

To better understand what has been set forth, several drawings are attached in which a practical embodiment is schematically depicted merely by way of non-limiting example.
Figure 1 is a perspective view of a tooth of an earth moving machine which includes the measuring system according to the present invention, in which the placement of the sensors is shown;
Figure 2 is a longitudinal section elevational view of a tooth of an earth moving machine which includes the measuring system according to the present invention, in which the force vectors during use of the earth moving machine are shown;
Figure 3 is a longitudinal section elevational view of a tooth and tooth bar assembly of an earth moving machine which includes the measuring system according to the present invention;
Figure 4 is a longitudinal section plan view of a tooth and tooth bar assembly of an earth moving machine which includes the measuring system according to the present invention;
Figure 5 is a longitudinal section elevational view of a tooth bar with a fixing element and a pin of an earth moving machine which includes the measuring system according to the present invention, with the sensors placed in the fixing element; and
Figure 6 is a longitudinal section elevational view of a tooth bar with a tooth of an earth moving machine which includes the measuring system according to the present invention, with the sensors placed in the tooth bar.

### Description of a preferred embodiment

The force measuring system is used in an earth moving machine, particularly for measuring the force that the wear elements of said earth moving machine withstand.

Based on the measurement, central control means are capable of interpreting the real data obtained from the force measuring system and the data of the machine to manage machine productivity and efficiency.

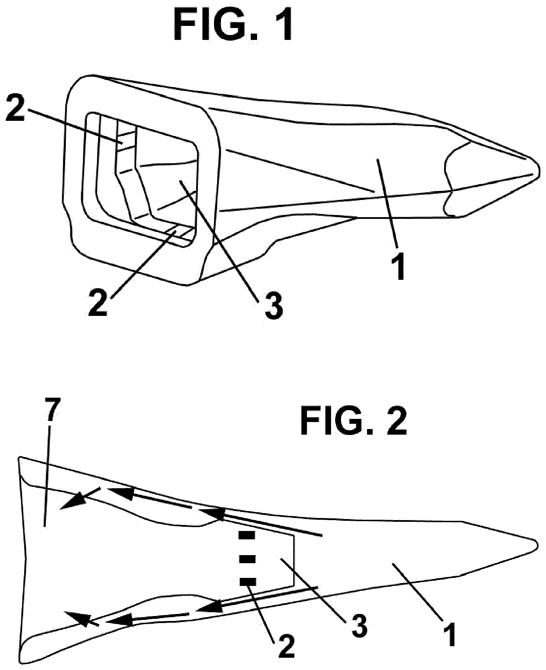

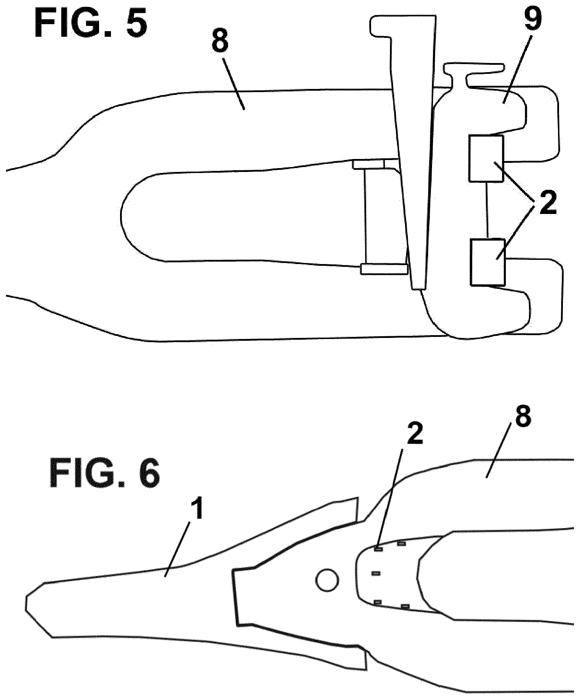

For the sake of simplicity, a tooth has been depicted in Figures 1 to 4 as a wear element in the present description, but the sensors could also be assembled in any wear element of the earth moving machinery, such as in the tooth bar, in the fixing elements (shown in Figure 5), in the guards or in the pins (shown in Figure 6).

To achieve a precise and reliable measurement of the pressure that is withstood, the measuring system according to the present invention comprises one or more sensors 2, such as, for example, strain gauges, which can be flat or cylindrical, optical fiber strips, piezoelectric strips or pressure sensors.

Said sensors 2 are placed inside a cavity 3 made in each tooth 1, as shown in Figures 1 and 2, such that the measurement of the force is the point that is as close as possible to where said force is withstood.

Said cavity 3 preferably has a tapered shape, such that is narrower in its front part than in its rear part, and the thickness defined between the outer part of the tooth 1 and the cavity 3 being thicker in the front part than in the rear part.

Preferably, said sensors 2 are placed in the side walls of the cavity 3, although they could also be placed in the front wall of said cavity 3, which is advantageously flat.

Said cavity 3 is communicated with a housing 7, which houses a tooth bar 8 of the earth moving machine.

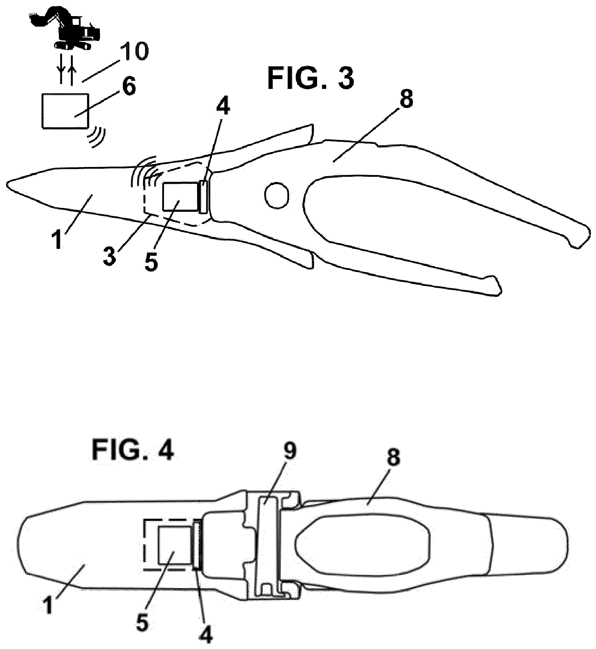

Figures 3 and 4 show that the measuring system according to the present invention also comprises control electronics 5, which is also housed inside said cavity inside a resistant case.

Said control electronics 5 is connected to the sensors 2 and sends a signal wirelessly or by cable to central control means 6 located outside the tooth, such that information about the force or pressure exerted on the teeth 1 can be obtained in real time. This communication between the machine and the control electronics or sensors allows developing instructions (10) for efficiently managing the work of the machine.

To prevent accidental damage to the control electronics 5, a protective plate 4, for example, of metal, such as steel, can be placed in said cavity 3.

It must also be indicated that the cavity 3 is coated with a protective substance, such as of silicone or resin, to isolate the components inside the cavity 3 against moisture, water and dirt.

The placement of the sensors 2 in the teeth 1 themselves provides more sensitive and precise data of each position individually than if they were placed in other structural elements, without needing to use mathematical approximations.

Furthermore, according to Hooke's law, stress relating to force and stress relating to voltage are linked under one and the same constant of proportionality.

Thus, under a given deformation in the sensors 2, for example, strain gauges, the voltage varies, and the force that the tooth 1 has received can be determined, subject to calibration.

The geometry of the previously described cavity 3 takes into account the compromise between deformation and voltage so that the information can be sensitive enough so as not to be confused with electronic noise, but in turn robust enough to withstand the working stresses, and furthermore not exceed a maximum deformation limit, in which the sensors 2 would be damaged, making it impossible to take the measurements (this occurs when the elastic area of the materials of the sensors 2 is exceeded, since they would be permanently deformed).

In addition to the cavity 3, the housing 7 is very important because if the contact points are not constant, the distance between the application force and the reaction point would vary, which would lead to errors in obtaining the forces (variation of the rigidity of the system determined by Hooke's law in static mechanics).

As previously indicated this solution for measuring the force to which the teeth are subjected is inexpensive and can be easily implemented on an industrial level. Furthermore, as there is real time communication with the machine, the machine can interpret the data and make decisions based on the received pressure (or force) readings, and depending on the readings, the machine decides whether or not to excavate with more force. For example, if the recorded pressure or force is very high, it makes the machine reduce the breakout force exerted.

Figures 5 and 6 are longitudinal section elevational views of a tooth bar with a fixing element of an earth moving machine which includes the measuring system according to the present invention, with the sensors placed 2 in the fixing element 9 (Figure 5) and in the tooth bar (8) (Figure 6).

Despite having referred to a specific embodiment of the invention, it is evident for one skilled in the art that the force measuring system for earth moving machinery that has been described is susceptible to a number of variations and modifications, and that all the mentioned details can be replaced with other technically equivalent ones without departing from the scope of protection defined by the attached the claims.

## Claims

1. Force measuring system for earth moving machinery, the earth moving machinery comprising a plurality of wear elements (1, 8, 9) and one or more sensors (2) for measuring forces, **characterized in that** said one or more sensors (2) are placed in at least one of the wear elements (1, 8, 9) themselves.

2. Force measuring system for earth moving machinery according to claim 1, wherein said one or more sensors (2) are placed between the wear elements (1, 8, 9) themselves.

3. Force measuring system for earth moving machinery according to claim 2, wherein said one or more sensors (2) are internally housed in a cavity (3) formed in at least one of the wear elements (1, 8, 9).

4. Force measuring system for earth moving machinery according to claim 3, wherein said one or more sensors (2) are placed in the side walls and/or in the front wall of said cavity (3) and/or between the wear elements (1, 8, 9).

5. Force measuring system for earth moving machinery according to any one of the preceding claims, wherein said one or more sensors (2) are strain gauges and/or pressure gauges and/or relative displacement gauges.

6. Force measuring system for earth moving machinery according to claim 3, wherein said cavity (3) has a tapered shape, being narrower in the front part than in the rear part.

7. Force measuring system for earth moving machinery according to claim 3 or 6, wherein the thickness defined between the outer part of the wear element (1) and the cavity (3) is greater in the front part of the cavity (3) than in the rear part of the cavity (3).

8. Force measuring system for earth moving machinery according to claim 3, wherein said cavity (3) is coated with a protective substance.

9. Force measuring system for earth moving machinery according to claim 8, wherein said protective substance is silicone or resin.

10. Force measuring system for earth moving machinery according to claim 3, wherein said cavity (3) comprises a protective plate (4), for example, of steel.

11. Force measuring system for earth moving machinery according to claim 3, wherein control electronics (5) are housed inside said cavity (3), said control electronics (5) being connected with the sensors (2).

12. Force measuring system for earth moving machinery according to claim 1, comprising control electronics (5) which is connected to central control means (6), which calculate the force that the wear elements (1) withstand depending on the values received from the sensors (2).

13. Force measuring system for earth moving machinery according to claim 3, wherein at least one wear element (1) comprises a housing (7) in communication with said cavity (3).

14. Force measuring method for earth moving machinery, the earth moving machinery comprising a plurality of wear elements (1, 8, 9) and one or more sensors (2) for measuring forces, **characterized in that** it comprises the steps of:
- measuring forces withstood by the wear elements (1, 8, 9) by means of said one or more sensors (2);
- sending the values of the measured forces to control electronics (5) and/or to central control means (6); and
- determining an action to be performed depending on the received readings, if the measured forces exceed a predetermined threshold, said action being at least one from emitting a warning or increasing the excavating force, in an automatic manner or by means of the operator of the machinery, and if the recorded forces are less than an optimal level, said action being at least a warning or reducing the excavating force, in an automatic manner or by means of the operator of the machinery.

15. Force measuring method for earth moving machinery according to claim 14, which also comprises the step of receiving data from the earth moving machinery and combining it with the measured forces in order to determine said action to be performed.
